# EUROPEAN PATENT APPLICATION

(11) **EP 4 794 096 A1**
(43) Date of publication of application: **19.08.2026**
(21) Application number: 26153397.0
(22) Date of filing: 27.12.2022
(51) Int. Cl.: H01M 50/35, H01M 50/102, H01M 10/647, H01M 10/6563, H01M 10/6566

(54) **BATTERY PACK, AND ESS AND VEHICLE INCLUDING THE BATTERY PACK**

(30) Priority: 27.12.2021 KR 20210188647
(62) Document number(s) of the earlier application(s) in accordance with Art. 76 EPC: 22916718.4 / 4 343 946
(71) Applicant: LG Energy Solution, Ltd., Seoul 07335 (KR)
(72) Inventor: KIM, Seung-Hyun, 34122 DAEJEON (KR); OH, Young-Hoo, 34122 DAEJEON (KR); OK, Seung-Min, 34122 DAEJEON (KR); JO, Sang-Hyun, 34122 DAEJEON (KR); CHO, Young Bum, 34122 DAEJEON (KR); HONG, Sung-Goen, 34122 DAEJEON (KR)
(74) Representative: Plasseraud IP

(57) **Abstract**

A battery pack according to an embodiment of the present invention includes a module assembly including a plurality of battery modules each including, on a side, a module opening through which venting gas is discharged, a pack cover facing the module opening and configured to cover the side of the module assembly, and an oxygen introduction preventing member located in a space formed between the module assembly and the pack cover and configured to prevent oxygen from being reversely introduced after venting gas is discharged in an extension direction of the space.

## Description

### TECHNICAL FIELD

The present disclosure relates to a battery pack, and an energy storage system (ESS) and a vehicle including the battery pack.

The present application claims priority to Korean Patent Application No. 10-2021-0188647, filed on December 27, 2021 in the Republic of Korea, the disclosures of which are incorporated herein by reference.

### BACKGROUND ART

A battery pack applied to a device such as an energy storage system (ESS) or an electric vehicle may be manufactured to include a plurality of battery modules to which high-power and high-capacity lithium secondary batteries are applied. To satisfy output characteristics of battery packs applied to devices that require high power and large capacity such as energy storage systems (ESSs) and electric vehicles and to realize high capacity, the number of lithium secondary batteries included in one battery module may be increased and the number of battery modules included in one battery pack may be increased.

However, when a fire or explosion occurs in a battery pack including such a large number of lithium secondary batteries, damage is inevitably increased.

A fire occurring in a battery pack starts from an abnormal temperature increase and generation of internal gas of a lithium secondary battery in a battery module. When a temperature of a lithium secondary battery abnormally rises, internal gas is generated, and internal pressure of the lithium secondary battery increases to a certain level or more, venting occurs in the lithium secondary battery, and thus, high-temperature gas is ejected to the outside of the lithium secondary battery, and a high-temperature spark including an electrode active material and aluminum particles is ejected. When the high-temperature gas and spark meet oxygen, a fire may occur.

In particular, a situation where high-temperature venting gas and a high-temperature spark generated by a thermal event meet a large amount of oxygen is likely to occur immediately after venting gas generated in a battery pack rapidly escapes to the outside at high pressure. That is, because pressure in a battery pack is greatly increased for a moment due to venting of a secondary battery caused by a thermal event, and then, when venting gas is rapidly discharged, the pressure in the battery pack is greatly reduced in a short time, negative pressure may rather act inward from the outside, and thus, a large amount of oxygen may be introduced. In this case, a fire may occur when high-temperature gas and spark remaining in the battery pack and the large amount of oxygen meet each other.

Accordingly, it is necessary to develop a battery pack structure in which venting gas, generated during a thermal event, may be discharged at an appropriate speed despite high initial venting pressure, to prevent generation of negative pressure due to a rapid decrease in the venting pressure. Also, it is necessary to develop a battery pack structure in which the amount of oxygen introduced into a battery pack may be minimized even when negative pressure is generated as venting pressure decreases.

### DISCLOSURE

### Technical Problem

The present disclosure is designed to solve the problems of the related art, and therefore the present disclosure is directed to providing a battery pack configured to minimize generation of negative pressure due to a rapid decrease in venting pressure by discharging venting gas, generated during a thermal event, at an appropriate speed.

The present disclosure is also directed to providing a battery pack configured to minimize the amount of oxygen introduced into the battery pack even when negative pressure is generated as venting pressure decreases.

However, technical objectives to be achieved by the present disclosure are not limited thereto, and other unmentioned technical objectives will be apparent to one of ordinary skill in the art from the description of the present disclosure.

### Technical Solution

A battery pack according to an embodiment of the present disclosure includes a module assembly including a plurality of battery modules each including, on a side, a module opening through which venting gas is discharged, a pack cover facing the module opening and configured to cover the side of the module assembly, and an oxygen introduction preventing member located in a space formed between the module assembly and the pack cover and configured to prevent oxygen from being reversely introduced after venting gas is discharged in an extension direction of the space.

The battery pack may further include a pack opening provided at at least one of both ends of the space in the extension direction.

A plurality of oxygen introduction preventing members may be provided, wherein the plurality of oxygen introduction preventing members are spaced apart from each other in the extension direction of the space.

The oxygen introduction preventing member may be located between a pair of battery modules that are adjacent to each other in the space.

The space may include a plurality of partition spaces divided by the oxygen introduction preventing member, wherein the oxygen introduction preventing member has a structure that is opened and closed to allow or block flow of a fluid between adjacent partition spaces.

The oxygen introduction preventing member may be configured to be opened when pressure of a fluid flowing in the extension direction of the space is equal to or higher than reference pressure.

The oxygen introduction preventing member may be an opening/closing door configured to be rotatable.

The oxygen introduction preventing member may be a valve having a partially cut structure to be opened and closed.

The oxygen introduction preventing member may be configured to be opened only in one direction.

In the plurality of battery modules, the module opening may include a first module opening provided on a side of each battery module and a second module opening provided on the other side.

The pack cover may include a first pack cover provided on a side of the module assembly and a second pack cover provided on the other side.

The battery pack may further include a first pack opening formed at one of both ends of a space formed between the first pack cover and the module assembly in the extension direction, and a second pack opening formed at the other end opposite to the one of both ends of a space formed between the second pack cover and the module assembly in the extension direction.

The oxygen introduction preventing member may include a first oxygen introduction preventing member located in a first space formed between the first pack cover and the module assembly and a second oxygen introduction preventing member located in a second space formed between the second pack cover and the module assembly.

An energy storage system (ESS) according to an embodiment of the present disclosure may include the battery pack of the present disclosure.

A vehicle according to an embodiment of the present disclosure may include the battery pack of the present disclosure.

### Advantageous Effects

According to an aspect of the present disclosure, venting gas generated during a thermal event may be discharged at an appropriate speed, and thus, generation of negative pressure due to a rapid decrease in venting pressure may be minimized.

According to another aspect of the present disclosure, the amount of oxygen introduced into a battery pack may be minimized even when negative pressure is generated as venting pressure decreases, and thus, a fire may be prevented.

However, effects achievable by the present disclosure are not limited thereto, and other unmentioned effects will be apparent to one of ordinary skill in the art from the following detailed description.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view illustrating an outer appearance of a battery pack, according to an embodiment of the present disclosure.
FIG. 2 is a view illustrating an oxygen introduction preventing member located between a pack cover and a module assembly, according to the present disclosure.
FIG. 3 is a view illustrating a battery module, according to the present disclosure.
FIG. 4 is a view illustrating a module opening provided in a battery module, according to the present disclosure.
FIG. 5 is a view illustrating an arrangement structure of an oxygen introduction preventing member and an operation of the oxygen introduction preventing member according to a flow of venting gas, according to the present disclosure.
FIGS. 6 and 7 are views illustrating a shape of an oxygen introduction preventing member, according to the present disclosure.
FIG. 8 is a view illustrating a battery module including module openings on a side and the other side.
FIG. 9 is a view illustrating a battery pack including pack openings on a side and the other side.
FIG. 10 is a view illustrating a flow of a cooling fluid, in the battery pack of FIG. 9.
FIG. 11 is a view illustrating an opening operation of an oxygen introduction preventing member according to a flow of a cooling fluid, in the battery pack of FIG. 9.
FIG. 12 is a view illustrating an energy storage system (ESS), according to an embodiment of the present disclosure.
FIG. 13 is a view illustrating a vehicle, according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

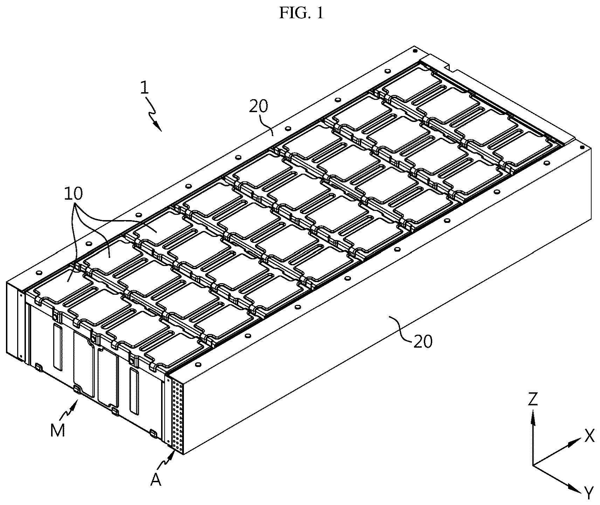

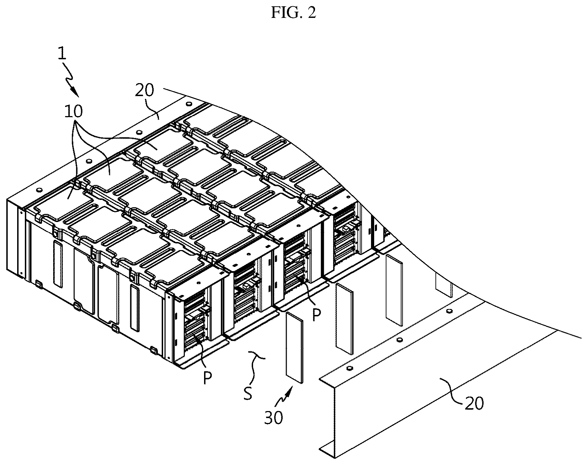

Referring to FIGS. 1 and 2, a battery pack 1 according to an embodiment of the present disclosure includes a module assembly M, a pack cover 20, and an oxygen introduction preventing member 30. The module assembly M may include a plurality of battery modules 10 each including, on a side, a module opening P through which venting gas may be discharged. The pack cover 20 may face the module opening P to cover the side of the module assembly M. The oxygen introduction preventing member 30 may be located in a space S formed between the module assembly M and the pack cover 20. The oxygen introduction preventing member 30 may be configured to prevent oxygen from being reversely introduced after venting gas is discharged in an extension direction (direction parallel to an X axis) of the space.

When the battery pack 1 of the present disclosure is configured as described above, a flow of venting gas discharged from the battery module 10 due to a thermal event and along the extension direction of the space S may be delayed. When a discharge flow of venting gas is appropriately delayed in this way, generation of negative pressure due to a great decrease in pressure at the late stage of discharge compared to pressure at the initial stage of discharge of the venting gas may be minimized or prevented.

When venting occurs in the battery module 10 due to a thermal event, a high-temperature spark material (e.g., an electrode active material or aluminum metal particles) may be discharged together with high-temperature venting gas. When the high-temperature venting gas and the high-temperature spark material meet oxygen, a fire may occur. The battery pack 1 of the present disclosure may prevent an explosion due to an abnormal increase in internal pressure of the battery pack 1 through discharge of venting gas and may prevent a large amount of oxygen from being introduced due to generation of a lot of negative pressure from the outside into the battery pack 1 by preventing a sudden change in venting gas discharge pressure. Accordingly, because a fire is prevented from occurring when ignitable materials and oxygen meet each other, safety in use of a secondary battery may be greatly improved.

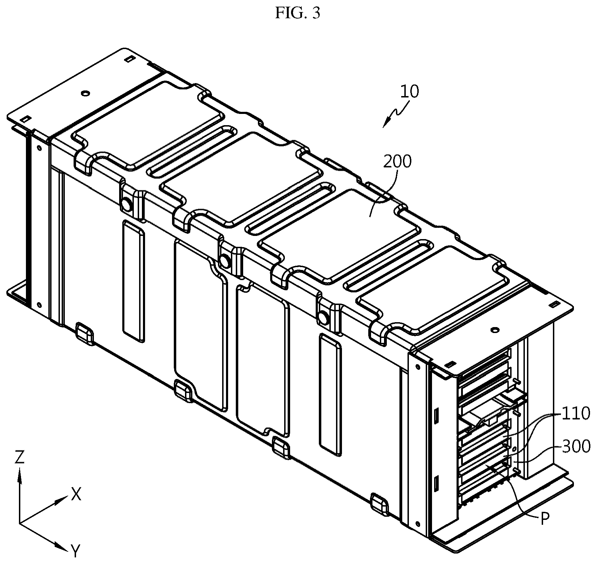

FIG. 3 is a view illustrating a shape of the battery module 10, according to the present disclosure. Referring to FIG. 3, the battery module 10 may include a cell assembly including a plurality of battery cells 100, a module housing 200 in which the cell assembly is accommodated, and a cover frame 300 configured to cover an open side of the module housing 200. The battery cell 100 may include an electrode lead 110 connected to an electrode assembly (not shown) therein and drawn out of a cell case. The battery cell 100 may be, for example, a pouch-type battery cell. The module housing 200 may have a shape with at least one open side. The electrode lead 110 may extend toward the open side of the module housing 200. The cover frame 300 may include a lead slit through which the electrode lead 110 passes. A bus bar may be located on the cover frame 300, and each of a plurality of electrode leads 110 may pass through the lead slit and may be coupled to the bus bar.

When the battery module 10 of the present disclosure has such a structure, a module opening P that is a gap through which venting gas generated in the battery module 10 may be discharged may be formed between the lead slit and the electrode lead 110. The module opening P may function as a path through which a cooling fluid (e.g., air) may be introduced when the battery pack 1 is normally used, and may function as a path through which venting gas is discharged when venting gas is generated due to a thermal event.

Referring to FIGS. 1 to 3, a plurality of battery modules 10 may be arranged so that the module openings P face the same direction. In the module assembly M, the module opening P may be formed in a plane (X-Z plane) facing the pack cover 20 of the present disclosure.

Referring to FIGS. 1 and 2, the pack cover 20 may be configured to cover a side of the module assembly M. The pack cover 20 may be coupled to the module assembly M. The pack cover 20 may face the module opening P of the battery module 10. The pack cover 20 may be spaced apart from the module assembly M by a certain distance so that the space S for a flow of venting gas discharged from the module opening P of the battery module 10 is formed. The pack cover 20 may extend in an arrangement direction (direction parallel to the X axis) of the plurality of battery modules 10.

Because the battery pack 1 of the present disclosure includes the pack cover 20 as described above, venting gas and a spark material that may be discharged from each of the plurality of battery modules 10 may be blocked. Also, when venting gas is discharged from at least some of the plurality of battery modules 10 included in the module assembly M, the pack cover may guide the venting gas to be discharged in a desired direction.

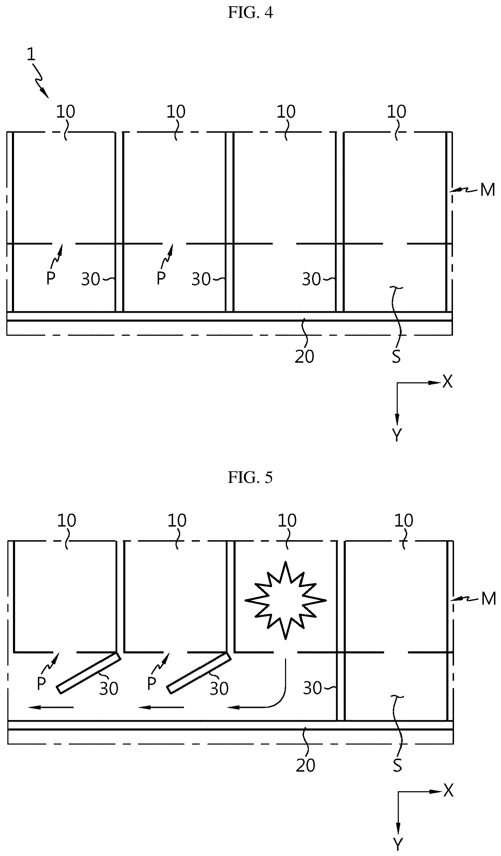

Referring to FIGS. 2 and 4, the oxygen introduction preventing member 30 may be configured to allow the flow of a cooling fluid and the flow of venting gas, and to block the introduction of oxygen due to negative pressure. The oxygen introduction preventing member 30 will be described below in detail with reference to the drawings.

Referring to FIGS. 1 and 2, the battery pack 1 may include a pack opening A (see FIG. 1). The pack opening A may be provided at at least one of both ends of the space S formed between the module assembly M and the pack cover 20 in the extension direction (direction parallel to the X axis). According to this structure, the battery pack 1 may discharge venting gas discharged through the module opening P and flowing in the extension direction of the space S to the outside. Accordingly, an explosion of the battery pack 1 due to an increase in internal pressure of the battery pack 1 as venting gas is generated may be prevented.

Referring to FIGS. 2 and 4, a plurality of oxygen introduction preventing members 30 may be provided. The plurality of oxygen introduction preventing members 30 may be spaced apart from each other in the extension direction of the space S. The oxygen introduction preventing member 30 may be located between a pair of battery modules 10 that are adjacent to each other in the space S. According to this arrangement of the oxygen introduction preventing members 30, when venting gas is discharged from any one of adjacent battery modules 10, the venting gas may be prevented from being easily introduced into the neighboring battery module 10. In another aspect, according to this arrangement of the oxygen introduction preventing members 30, smooth discharge of venting gas through the module opening P may not be hindered. In particular, when a plurality of oxygen introduction preventing members 30 are provided and each of the plurality of oxygen introduction preventing members 30 is located at a position corresponding to a gap between a pair of adjacent battery modules 10 in the space S, smooth discharge of venting gas through the module opening P may be maintained, and rapid discharge of venting gas in the extension direction of the space S may be well suppressed.

Referring to FIGS. 4 and 5, the space S formed between the pack cover 20 and the module assembly M may include a plurality of partition spaces divided by the oxygen introduction preventing members 30. In this case, the oxygen introduction preventing member 30 may have a structure that may be opened and closed to allow or block the flow of a fluid between adjacent partition spaces.

For example, the oxygen introduction preventing member 30 may be configured to be opened when pressure of a fluid flowing in the extension direction of the space S is equal to or higher than a reference level. The oxygen introduction preventing member 30 may be configured to be opened by circulation pressure of a cooling fluid. The oxygen introduction preventing member 30 may be configured to be opened by discharge pressure of venting gas at the initial stage of venting due to a thermal event, and not to be opened by venting pressure that decreases when a certain time elapses after the venting occurs. That is, reference pressure at which the oxygen introduction preventing member 30 may be opened may be lower than circulation pressure (first pressure) of a cooling fluid and discharge pressure (second pressure) of venting gas at the initial stage of venting, and may be higher than discharge pressure (third pressure) of venting gas when a certain period of time elapses after the venting.

When the reference pressure for opening the oxygen introduction preventing member 30 is set as described above, smooth cooling may be maintained and the introduction of oxygen due to rapid discharge of venting gas may be prevented. For cooling, sufficient circulation pressure of a cooling fluid may be generated by driving of a device for cooling the battery pack 1 (e.g., a fan for circulating cooling air) by considering the reference pressure. Accordingly, smooth cooling may be possible even when the oxygen introduction preventing member 30 is applied. When venting gas of a secondary battery is discharged due to a thermal event, the venting gas is discharged at a very high pressure at the initial stage of discharge and then discharge pressure decreases as the amount of internal gas decreases. Accordingly, internal pressure may be reduced according to appropriate discharge of venting gas by adjusting the reference pressure at which the oxygen introduction preventing member 30 may be opened, and the introduction of oxygen due to generation of negative pressure due to a rapid decrease in pressure may also be prevented.

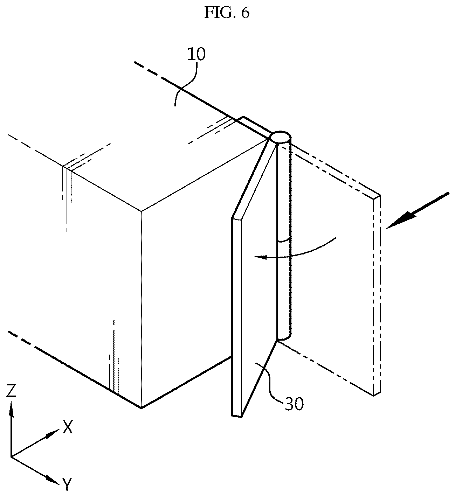

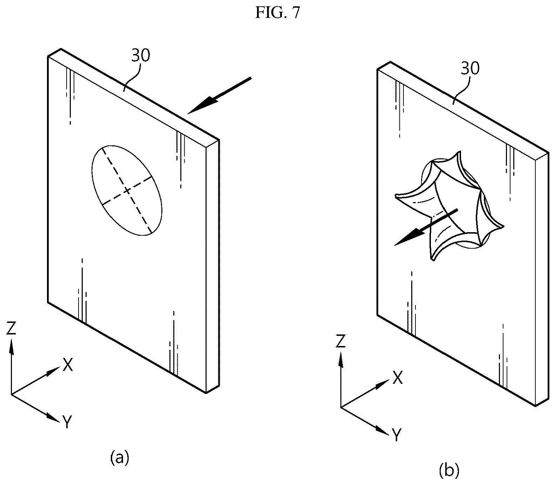

FIGS. 6 and 7 are views illustrating a shape of the oxygen introduction preventing member 30, according to the present disclosure.

First, referring to FIG. 6 together with FIG. 5, the oxygen introduction preventing member 30 may be an opening/closing door configured to be rotatable. The oxygen introduction preventing member 30 may be coupled to, for example, an edge of the battery module 10. The opening/closing door may be hinged to the battery module 10.

Although not shown, the opening/closing door may be configured to, when operating from a state, that is, a closed state, in which the space S is divided to an open state, receive an elastic restoring force to return to the closed state again. For example, a hinge applied to rotate the oxygen introduction preventing member may be a spring hinge. In this case, discharge of venting gas may be appropriately adjusted by adjusting an elastic modulus of a spring applied to the spring hinge. When the elastic modulus of the spring is too large, it is difficult to discharge venting gas, and when the elastic modulus of the spring is too small, it is difficult to prevent rapid discharge of venting gas, thereby making it difficult to prevent reverse introduction of oxygen due to negative pressure.

Next, referring to FIG. 7 together with FIG. 5, the oxygen introduction preventing member 30 may be a valve having a partially cut structure to be opened and closed. The oxygen introduction preventing member 30 may be coupled to, for example, an edge of the battery module 10. In the valve having the partially cut structure, opening pressure may be determined according to an area occupied by a cut portion relative to a total area, a thickness of a component used as the valve, and material properties applied to the component used as the valve. When the valve includes an elastic material such as resin, the valve may be opened by venting pressure that is equal to or higher than reference pressure, and as the venting gas is discharged and discharge pressure of the venting gas decreases, the valve may be slowly closed by an elastic restoring force.

As described above, the oxygen introduction preventing member 30 of the present disclosure may be provided as an opening/closing door and/or a valve. Also, the oxygen introduction preventing member 30 may be configured to have an elastic restoring force, and thus, a degree of opening of the oxygen introduction preventing member 30 may be proportional to a magnitude of applied pressure. As such, the battery pack 1 of the present disclosure may be configured to allow smooth cooling by applying cooling fluid circulation pressure for completely opening the oxygen introduction preventing member 30. Also, in the battery pack 1 of the present disclosure, the oxygen introduction preventing member 30 may be completely opened by high pressure at the initial stage of discharge of venting gas to rapidly reduce internal pressure, and as discharge pressure of gas decreases, the oxygen introduction preventing member 30 may be slowly closed to block the introduction of oxygen.

The oxygen introduction preventing member 30 may be configured to be opened only in one direction. For example, the oxygen introduction preventing member 30 may be a one-way opening/closing door or a one-way opening/closing valve. In this case, because the oxygen introduction preventing member 30 is configured to be opened only in a discharge direction of venting gas and not to be opened in the opposite direction, even when discharge pressure of venting gas decreases, the oxygen introduction preventing member 30 is only closed and may not be opened in the reverse direction. Accordingly, reverse introduction of oxygen due to a decrease in discharge pressure of venting gas is impossible.

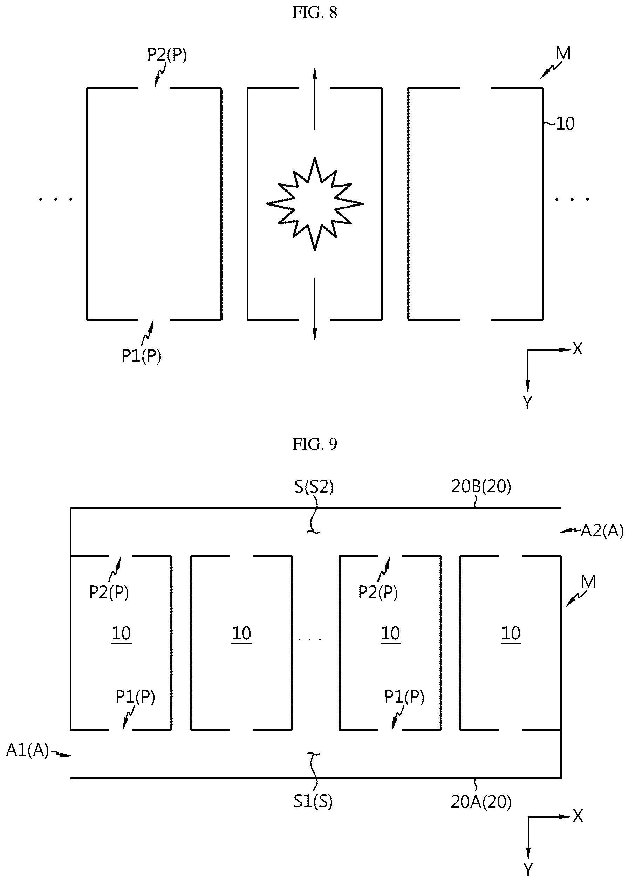

Referring to FIGS. 8 and 9, in the plurality of battery modules 10, the module opening P may include a first module opening P1 provided on a side of each battery module 10 and a second module opening P2 provided on the other side.

The pack cover 20 may include a first pack cover 20A provided on a side of the module assembly M and a second pack cover 20B provided on the other side. In this case, venting gas discharged through one side of the battery module 10 and venting gas discharged through the other side may be guided to flow in the arrangement direction (direction parallel to the X axis) of the plurality of battery modules 10.

The battery pack 1 of the present disclosure may include a first pack opening A1 and a second pack opening A2. The first pack opening A1 may be formed at one of both ends of a space S1 formed between the first pack cover 20A and the module assembly M in the extension direction (direction parallel to the X axis). The second pack opening A2 may be formed at the other end opposite to the one of both ends of a space S2 formed between the second pack cover 20A and the module assembly M in the extension direction.

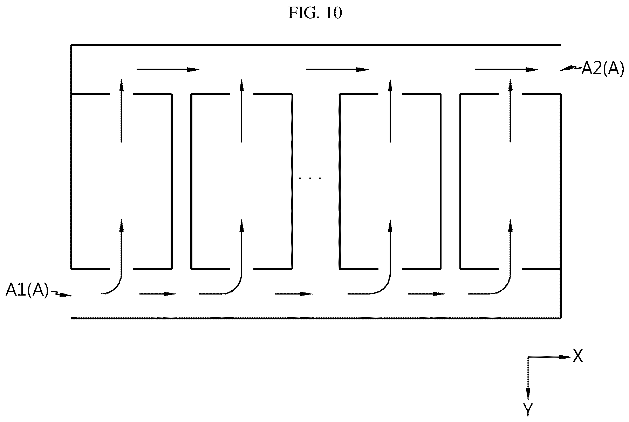

Referring to FIG. 10 together with FIGS. 8 and 9, when the battery pack 1 of the present disclosure is configured as described above, any one of the first pack opening A1 and the second pack opening A2 may be used as an inlet of a cooling fluid and the other may be used as an outlet of the cooling fluid. Also, a cooling fluid may directly pass through the inside of the plurality of battery modules 10, thereby achieving effective cooling (see a movement path of a cooling fluid in an arrow direction of FIG. 10).

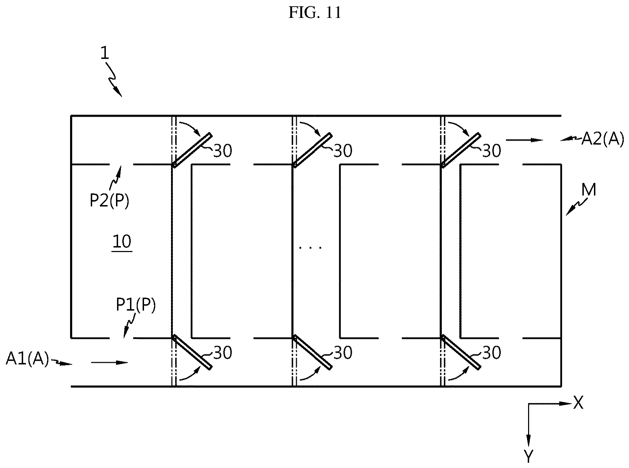

Referring to FIG. 11 together with FIGS. 8 to 10, the oxygen introduction preventing member 30 of the present disclosure may be provided in each of the first space S1 formed between one side of the module assembly M and the first pack cover 20A and the second space S2 formed between the other side of the module assembly M and the second pack cover 20B.

In the battery pack 1 of the present disclosure, when the first pack opening A1 is used as an inlet for introducing a cooling fluid and the second pack opening A2 is used as an outlet for discharging the cooling fluid, the oxygen introduction preventing member 30 provided in the first space S1 may be configured to be opened toward the second pack opening A2 as the cooling fluid flows. As described above, the oxygen introduction preventing member 30 may be configured to be opened when pressure of a fluid is equal to or higher than reference pressure. Accordingly, when a cooling fluid is circulated at a pressure equal to or higher than the reference pressure, the oxygen introduction preventing member 30 may be opened and cooling of the battery pack 1 may be smoothly performed.

In the battery pack 1 of the present disclosure, when venting gas is discharged from the battery module 10 due to a thermal event, venting gas discharged through the first module opening P1 may cause the oxygen introduction preventing member 30 located in the first space S1 to be opened toward the first pack opening A1. Accordingly, the venting gas may be discharged to the outside of the battery pack 1 through the first pack opening A1. Venting gas discharged through the second module opening P2 may cause the oxygen introduction preventing member 30 located in the second space S2 to be opened toward the second pack opening A2. Accordingly, the venting gas may be discharged through the second pack opening A2. As time elapses after the venting gas is discharged, venting pressure may decrease, and thus, the oxygen introduction preventing member 30 may be slowly closed to prevent oxygen from being reversely introduced.

When the oxygen introduction preventing member 30 is configured to be opened in both directions, both the first pack opening A1 used as an inlet of a cooling fluid and the second pack opening A2 used as an outlet may function as openings for discharging venting gas. That is, a discharge direction of a cooling fluid and a discharge direction of venting gas may not be the same.

On the other hand, when the oxygen introduction preventing member 30 is configured to be opened only in one direction, a discharge direction of a cooling fluid and a discharge direction of venting gas are the same. As described above, when the first pack opening A1 functions as an inlet of a cooling fluid and the second pack opening A2 functions as an outlet of the cooling fluid, the oxygen introduction preventing member 30 located in the first space S1 may be configured to be opened only in a direction opposite to the first pack opening A1, and the oxygen introduction preventing member 30 located in the second space S2 may be configured to be opened only in a direction toward the second pack opening A2. In this case, venting gas from the battery module 10 may be discharged through the second module opening P2. Venting gas introduced into the second space S2 through the second module opening P2 may be discharged to the outside of the battery pack 1 through the second pack opening A2. At the initial stage of venting, the oxygen introduction preventing member 30 located in the second space S2 may be opened toward the second pack opening A2 due to high venting pressure, to discharge venting gas. As time elapses after the venting starts, venting pressure may decrease, the oxygen introduction preventing member 30 in the second space S2 may be slowly closed, and thus, oxygen may be blocked from being reversely introduced through the second pack opening A2. In this case, the oxygen introduction preventing member 30 located in the first space S1 may be maintained in a closed state.

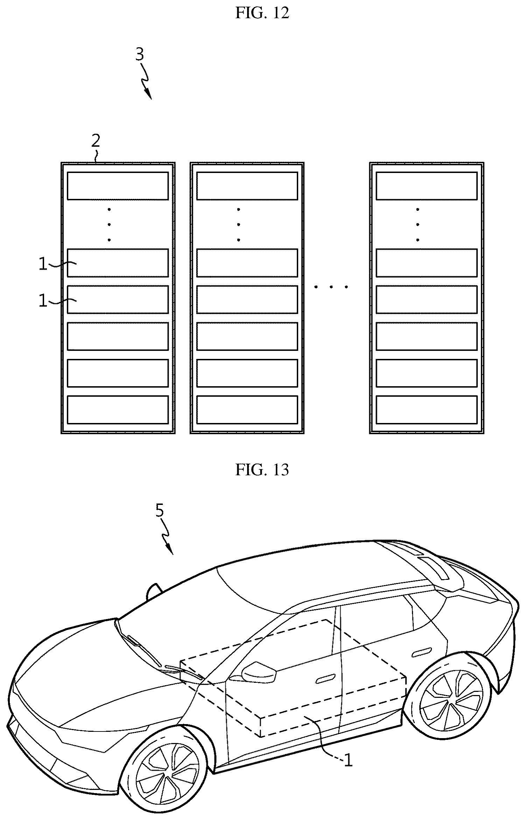

Referring to FIG. 12, an energy storage system (ESS) 3 according to an embodiment of the present disclosure may include the battery pack 1 according to the present disclosure. The ESS 3 may include a battery system including a plurality of battery packs 1 and a rack housing 2 in which the plurality of battery packs 1 may be stacked. The ESS 3 may include one or more battery systems.

Referring to FIG. 13, a vehicle 5 according to an embodiment of the present disclosure may include the battery pack 1 according to the present disclosure. The vehicle 5 may be driven by receiving power from one or more battery packs 1. The vehicle 5 may be, for example, an electric vehicle (EV) or a hybrid electric vehicle (HEV).

Further examples are provided in the following items.

Item 1. A battery pack comprising:
a module assembly comprising a plurality of battery modules each comprising, on a side, a module opening through which venting gas is discharged;
a pack cover facing the module opening and configured to cover the side of the module assembly; and
an oxygen introduction preventing member located in a space formed between the module assembly and the pack cover and configured to prevent oxygen from being reversely introduced after venting gas is discharged in an extension direction of the space.

Item 2. The battery pack according to item 1, further comprising a pack opening provided at least one of both ends of the space in the extension direction.

Item 3. The battery pack according to item 1, wherein a plurality of oxygen introduction preventing members are provided,
wherein the plurality of oxygen introduction preventing members are spaced apart from each other in the extension direction of the space.

Item 4. The battery pack according to item 1, wherein the oxygen introduction preventing member is located between a pair of battery modules that are adjacent to each other in the space.

Item 5. The battery pack according to item 1, wherein the space comprises a plurality of partition spaces divided by the oxygen introduction preventing member,
wherein the oxygen introduction preventing member has a structure that is opened and closed to allow or block flow of a fluid between adjacent partition spaces.

Item 6. The battery pack according to item 5, wherein the oxygen introduction preventing member is configured to be opened when pressure of a fluid flowing in the extension direction of the space is equal to or higher than reference pressure.

Item 7. The battery pack according to item 5, wherein the oxygen introduction preventing member is an opening/closing door configured to be rotatable.

Item 8. The battery pack according to item 5, wherein the oxygen introduction preventing member is a valve having a partially cut structure to be opened and closed.

Item 9. The battery pack according to item 5, wherein the oxygen introduction preventing member is configured to be opened only in one direction.

Item 10. The battery pack according to item 1, wherein, in the plurality of battery modules, the module opening comprises a first module opening provided on a side of each battery module and a second module opening provided on the other side.

Item 11. The battery pack according to item 10, wherein the pack cover comprises a first pack cover provided on a side of the module assembly and a second pack cover provided on the other side.

Item 12. The battery pack according to item 11, further comprising:
a first pack opening formed at one of both ends of a space formed between the first pack cover and the module assembly in the extension direction; and
a second pack opening formed at the other end opposite to the one of both ends of a space formed between the second pack cover and the module assembly in the extension direction.

Item 13. The battery pack according to item 11, wherein the oxygen introduction preventing member comprises a first oxygen introduction preventing member located in a first space formed between the first pack cover and the module assembly and a second oxygen introduction preventing member located in a second space formed between the second pack cover and the module assembly.

Item 14. An energy storage system (ESS) comprising the battery pack according to any one of item 1 to 13.

Item 15. A vehicle comprising the battery pack according to any one of item 1 to 13.

Although the embodiments of the present disclosure have been illustrated and described above, the present disclosure is not limited to the above-described specific embodiments. Various modified embodiments may be made by one of ordinary skill in the art without departing from the scope of the present disclosure as claimed in the claims.

### [Description of Reference Numerals]

1: battery pack
2: rack housing
3: energy storage system (ESS)
5: vehicle
10: battery module
P: module opening
P1: first module opening
P2: second module opening
M: module assembly
100: battery cell
110: electrode lead
200: module housing
300: cover frame
20: pack cover
20A: first pack cover
20B: second pack cover
S: space
S1: first space
S2: second space
A: pack opening
A1: first pack opening
A2: second pack opening
30: oxygen introduction preventing member

## Claims

1. A battery pack comprising:
a module assembly comprising a plurality of battery modules each comprising, on at least one side, a module opening through which venting gas is discharged;
a pack cover facing the module opening and configured to cover at least one side of the module assembly;
a pack opening having a first pack opening formed at one of both ends of a space formed between the pack cover and the module assembly in an extension direction and a second pack opening formed at the other end opposite to the one of both ends of the space in the extension direction; and
an oxygen introduction preventing member located in the space and configured to be openable in both directions or only in one direction, so as to toward the first pack opening or the second pack opening.

2. The battery pack according to claim 1, wherein the oxygen introduction preventing member is configured to prevent oxygen from being reversely introduced after venting gas is discharged in the extension direction of the space.

3. The battery pack according to claim 1, wherein the oxygen introduction preventing member is configured to be opened toward the first pack opening by the venting gas discharged through the module opening.

4. The battery pack according to claim 1, wherein the first pack opening is configured so that a cooling fluid is introduced, and the second pack opening is configured so that the cooling fluid is discharged.

5. The battery pack according to claim 4, wherein a discharge direction of the cooling fluid and a discharge direction of the venting gas inside the space are opposite to each other.

6. The battery pack according to claim 4, wherein the oxygen introduction preventing member is configured to be opened toward the second pack opening by a pressure of the cooling fluid.

7. The battery pack according to claim 1, wherein, in the plurality of battery modules, the module opening comprises a first module opening provided on a side of each battery module and a second module opening provided on the other side.

8. The battery pack according to claim 7, wherein the pack cover comprises a first pack cover provided on a side of the module assembly and a second pack cover provided on the other side.

9. The battery pack according to claim 8, wherein the first pack opening is formed at one of both ends of a first space formed between the first pack cover and the module assembly in the extension direction, and
wherein the second pack opening is formed at the other end opposite to the one of both ends of a second space formed between the second pack cover and the module assembly in the extension direction.

10. The battery pack according to claim 9, wherein the oxygen introduction preventing member comprises a first oxygen introduction preventing member located in the first space and a second oxygen introduction preventing member located in the second space.

11. The battery pack according to claim 10, wherein the first oxygen introduction preventing member is configured to be opened toward the first pack opening by the venting gas discharged through the first module opening, and
wherein the second oxygen introduction preventing member is configured to be opened toward the second pack opening by the venting gas discharged through the second module opening.

12. The battery pack according to claim 10, wherein the first pack opening is configured so that a cooling fluid is introduced, and the second pack opening is configured so that the cooling fluid is discharged.

13. The battery pack according to claim 12, wherein a discharge direction of the cooling fluid and a discharge direction of the venting gas inside the first space are opposite to each other.

14. The battery pack according to claim 12, wherein the first oxygen introduction preventing member and the second oxygen introduction preventing member are configured to be opened toward the second pack opening by a pressure of the cooling fluid.

15. An energy storage system (ESS) comprising the battery pack according to any one of claims 1 to 14.

16. A vehicle comprising the battery pack according to any one of claims 1 to 14.
